Europäisches Patentamt

**European Patent Office**

**Office européen des brevets**

(19)

(11) Numéro de publication: **0 181 824**
**A1**

(12)

# DEMANDE DE BREVET EUROPEEN

(21) Numéro de dépôt: **85402207.6**

(22) Date de dépôt: **14.11.85**

(51) Int. Cl.⁴: **F 16 D 23/06**

(30) Priorité: **14.11.84 FR 8417391**

(43) Date de publication de la demande:
**21.05.86 Bulletin 86/21**

(84) Etats contractants désignés:
**DE IT SE**

(71) Demandeur: **HUTCHINSON**
**2 rue Balzac**
**F-75008 Paris(FR)**

(72) Inventeur: **Braut, Patrick**
**31, rue de Sainte Emérance**
**F-49370 La Poueze(FR)**

(74) Mandataire: **Picard, Jean-Claude Georges et al,**
**Cabinet Plasseraud 84, rue d'Amsterdam**
**F-75009 Paris(FR)**

(54) **Mécanisme de synchronisation, en particulier pour boîte de vitesses; verrou élastique pour un tel mécanisme.**

(57) Mécanisme de synchronisation, en particulier pour boîte de vitesses, dans lequel un baladeur (4) peut, par l'intermédiaire de verrous à rappel radial élastique logés dans le moyeu (5) du baladeur, mouvoir axialement l'une ou l'autre de deux couronnes coniques (9,10) de synchronisation, puis provoquer le crabotage des deux éléments à mettre mutuellement en prise, caractérisé en ce que lesdits verrous à rappel radial élastique sont constitués essentiellement d'une pièce élastique (20,21), notamment de forme générale cylindrique dont l'axe est orthogonal à la direction du déplacement axial des couronnes.

FIG.1.

FIG.2.

EP 0 181 824 A1

Mécanisme de synchronisation, en particulier pour boîte de vitesses ; verrou élastique pour un tel mécanisme.

La présente invention concerne un mécanisme de synchronisation, en particulier pour boîte de vitesses, dans lequel un baladeur peut, par l'intermédiaire de verrous à rappel radial élastique logés dans le moyeu du baladeur, mouvoir axialement l'une ou l'autre de deux couronnes coniques de synchronisation, puis provoquer le crabotage des deux éléments à mettre mutuellement en prise.

L'invention concerne également des verrous de tels mécanismes.

Habituellement, lesdits verrous à rappel radial élastique sont constitués chacun de deux parties bien distinctes, à savoir d'une part un galet rigide, qui est la partie directement actionnée par le baladeur, et qui agit à son tour axialement sur l'une ou l'autre desdites couronnes coniques de synchronisation, et d'autre part un ressort à lame agissant sous le galet et propre à le solliciter radialement vers l'extérieur, ce ressort étant logé dans une encoche radiale du moyeu du baladeur.

Ce type de disposition présente certains inconvénients. Le ressort à lame est fragile et casse quelquefois, et l'encoche radiale est assez importante, l'ensemble des encoches (en principe trois uniformément réparties) fragilisant ainsi le moyeu du baladeur.

En outre, le montage nécessite à chaque fois la mise en place, pour chaque verrou, de deux pièces distinctes dans les encoches radiales dudit moyeu.

Le but de la présente invention est de remédier à ces inconvénients, et, à cet effet, un mécanisme du type décrit au début sera, conformément à la présente invention, caractérisé en ce que lesdits verrous à rappel radial élastique sont constitués essentiellement d'une pièce élastique, notamment de forme générale cylindrique dont l'axe est orthogonal à la direction du déplacement axial des couronnes.

Ce cylindre remplira donc à la fois le rôle du galet rigide (métallique) connu jusqu'à présent, et le rôle du ressort à lame, ceci sous la forme d'une seule et même pièce, beaucoup plus facile à mettre en place et moins fragile, tout en nécessitant dans le moyeu du baladeur des encoches à extension radiale beaucoup moins importante qu'auparavant.

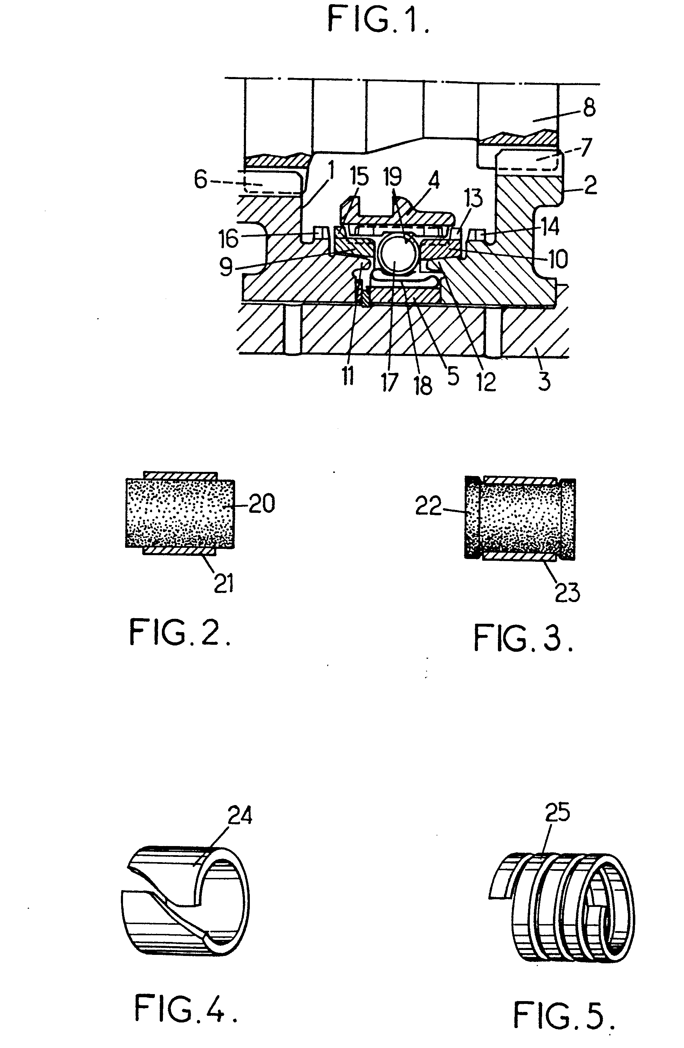

Dans le dessin ci-annexé, la figure 1 représente en demi-coupe axiale partielle un mécanisme de synchronisation à verrous de type connu, et les figures 2 à 5 représentent différents modes de réalisation de verrous conformes à la présente invention, pouvant être utilisés, dans le mécanisme de la figure 1, en remplacement de ces verrous connus.

Dans le mécanisme représenté à la figure 1, lequel peut faire partie d'une boîte de vitesses de véhicule automobile, on a référencé en 1 et 2 deux roues dentées montées folles sur un arbre 3, l'une ou l'autre de ces roues, sélectivement, pouvant être accouplée à l'arbre 3 par l'intermédiaire d'un baladeur 4 à moyeu 5 calé sur l'arbre. Les roues sont en prise permanente avec des engrenages, respectivement 6 et 7, d'un arbre 8 d'axe parallèle à celui du précédent. Les roues 1 et 2 étant de diamètres différents, on peut obtenir des rapports de transmission différents entre les deux arbres, selon que c'est la roue 1 ou la roue 2 qui est accouplée à l'arbre 3.

Pour que cet accouplement s'effectue de façon synchronisée, le baladeur 4 agit axialement sur l'une ou l'autre de deux couronnes coniques de synchronisation, 9 et 10, solidaires en rotation du baladeur 4 et qui peuvent agir respectivement sur les cônes de friction 11 et 12 des roues 1 et 2, après quoi le crabotage peut s'effectuer.

Sur la figure, on voit que, le baladeur ayant été déplacé vers la droite, ainsi que la couronne 10, on a représenté une position intermédiaire de synchronisation entre la roue 2 et l'arbre 3, avant continuation du déplacement du baladeur vers la droite et accouplement, effectué par le baladeur, entre les crabots 13 de la couronne 10 et 14 de la roue 2, la roue 1 étant libre.

Le mouvement dans le sens inverse du baladeur provoque bien entendu la synchronisation entre la roue 1 et l'arbre 3, avant accouplement des crabots 15 et 16, la roue 2 étant alors libérée.

Pour l'obtention du temps d'arrêt nécessaire entre synchronisation et crabotage, le baladeur 4 agit axialement sur les couronnes de synchronisation 9 et 10 par l'intermédiaire de verrous à rappel radial élastique.

De façon classique, les verrous, par exemple au nombre de trois, comprennent chacun un galet métallique rigide 17, rappelé radialement vers l'extérieur par un ressort à lame 18, le tout étant logé dans une encoche radiale du moyeu 5, ceci avec les divers inconvénients qui ont été mentionnés plus haut.

C'est par l'intermédiaire de ces galets rigides 17 que le baladeur 4 pousse axialement la couronne 9 ou la couronne 10, les galets butant sur l'un ou l'autre bord d'une encoche 19 du baladeur, et s'effaçant radialement vers l'intérieur en écrasant les ressorts 18, lorsque la synchronisation est finie, ce qui permet alors le crabotage.

Un mécanisme de synchronisation conforme à l'invention peut être semblable, tant dans sa structure que dans son fonctionnement, à celui qui vient d'être décrit, mais avec remplacement de chaque ensemble 17-18 de verrou élastique par un verrou élastique constitué d'un cylindre élastique dont l'axe est orthogonal à la direction du déplacement axial des couronnes. Ce cylindre peut être creux ou plein, et réalisé en toute matière appropriée. Il peut être constitué d'une ou de plusieurs pièces de matières différentes, mais ces pièces restant étroitement solidarisées et n'étant pas distinctes et indépendantes, comme le sont les galets 17 et ressorts 18.

Dans le mode de réalisation de la figure 2, on a représenté en coupe axiale un cylindre plein 20 en élastomère, emmmanché serré et/ou adhérisé dans un manchon élastique de protection 21, en acier, matière plastique ou résine, armée ou non. Ce manchon plus dur 21, qui entoure totalement ou partiellement le cylindre, permet d'éviter tout méplat ou autre déformation qui autrement pourrait apparaître sur le cylindre 20 du fait de ses contacts répétés avec des pièces métalliques.

Dans l'autre forme de réalisation possible de la figure 3, on a représenté, également en coupe axiale, un cylindre élastique 22 en forme de diabolo, en quelque sorte encliqueté ou serti dans un manchon élastique 23 (cette forme en diabolo peut résulter uniquement du fait qu'avant montage le cylindre 22 a un diamètre supérieur au diamètre interne du manchon).

Lorsque l'on utilise un manchon en acier, il peut ne pas être fermé, mais être constitué d'une languette 24 en forme de cylindre fendu (figure 4) ou 25 enroulée en hélice sur plusieurs tours (figure 5).

Ce type de manchon peut être solidarisé d'un cylindre en élastomère creux ou plein, d'une façon analogue à ce qui a été décrit avec référence aux figures 2 et 3.

## REVENDICATIONS

1. Mécanisme de synchronisation, en particulier pour boîte de vitesses, dans lequel un baladeur (4) peut, par l'intermédiaire de verrous à rappel radial élastique logés dans le moyeu (5) du baladeur, mouvoir axialement l'une ou l'autre de deux couronnes coniques (9,10) de synchronisation, puis provoquer le crabotage des deux éléments à mettre mutuellement en prise, caractérisé en ce que lesdits verrous à rappel radial élastique sont constitués essentiellement d'une pièce élastique (20,21), notamment de forme générale cylindrique dont l'axe est orthogonal à la direction du déplacement axial des couronnes.

2. Verrou élastique pour un mécanisme conforme à la revendication 1, caractérisé en ce qu'il comprend essentiellement un cylindre en élastomère ou analogue (20,22).

3. Verrou élastique selon la revendication 2, caractérisé en ce que ledit cylindre (20,22) est solidarisé d'un manchon élastique de protection (21,23) qui l'entoure, partiellement ou totalement.

4. Verrou élastique selon la revendication 3, caractérisé en ce que ledit cylindre (20,22) est emmanché à force et/ou adhérisé ou serti dans ledit manchon (21,23).

5. Verrou élastique selon la revendication 3 ou 4, caractérisé en ce que ledit manchon est constitué d'un cylindre métallique fendu (24).

6. Verrou élastique selon la revendication 3 ou 4, caractérisé en ce que ledit manchon est constitué d'une languette métallique enroulée en hélice (25).

0181824

# FIG.1.

# FIG.2.

# FIG.3.

# FIG.4.

# FIG.5.

# RAPPORT DE RECHERCHE EUROPEENNE

0181824

Numéro de la demande

EP 85 40 2207

Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 992 958 (INTERTECHNIQUE)<br>* En entier * | 1-5 | F 16 D 23/06 |
| Y | FR-A-1 181 512 (RENAULT)<br>* En entier * | 1-5 | |
| A | US-A-3 529 484 (TOMITA)<br>* En entier * | 1-5 | |
| A | US-A-4 125 179 (COCHRAN)<br>* Colonnes 4-6; figures 3-7 * | 1,5 | |
| A | US-A-2 519 032 (EATON) | | |
| A | DE-A-2 030 619 (TOYOTA) | | |

DOMAINES TECHNIQUES RECHERCHES (Int. Cl.4)

F 16 D 23/00

Le présent rapport de recherche a été établi pour toutes les revendications

| Lieu de la recherche | Date d'achèvement de la recherche | Examinateur |
|---|---|---|
| LA HAYE | 28-01-1988 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82